# DEMANDE DE BREVET EUROPEEN

(11) **EP 2 436 991 A1**
(43) Date de publication de la demande: **04.04.2012**
(21) Numéro de dépôt: 11183568.2
(22) Date de dépôt: 30.09.2011
(51) Int. Cl.: F24C 15/20, F24F 12/00

(54) **Hotte de traitement de l'air dans une cuisine et procede de traitement d'air dans une cuisine equipee d'une telle hotte**

(30) Priorité: 30.09.2010 FR 1057928
(71) Demandeur: France Air, 01700 Beynost (FR)
(72) Inventeur: Cachot, Lionel, 69400 VILLEFRANCHE (FR)
(74) Mandataire: Myon, Gérard Jean-Pierre

(57) **Abrégé**

Cette hotte (H) de traitement de l'air dans une cuisine (C), équipée d'un système d'extraction d'air (4, 20, 22) et d'un système de soufflage d'air (32, 34, 36) dans la cuisine (C), alimenté à partir d'air extérieur, et comprend des moyens (24) de récupération d'une partie de l'énergie calorifique contenue dans l'air extrait de la cuisine (C). Cette hotte comprend, en outre, des moyens de chauffage (38) de l'air soufflé dans la cuisine avec l'énergie calorifique récupérée, par les moyens de récupération (24), et un circuit (40, 42) reliant en boucle les moyens de récupération (24) et les moyens de chauffage (38), alors qu'un fluide caloporteur achemine l'énergie récupérée vers les moyens de chauffage (38) via le circuit (40, 42). La hotte (H) comprend des moyens (62) de mesure de la température de l'air à l'extérieur de la cuisine, et des moyens (52) pour activer ou désactiver les moyens de chauffage (38) de l'air soufflé dans la cuisine en fonction de la température (S62) de l'air à l'extérieur de la cuisine.

## Description

La présente invention concerne une hotte de traitement de l'air dans une cuisine, équipée d'un système d'extraction d'air et d'un système de soufflage d'air dans la cuisine alimenté à partir d'air extérieur. L'invention concerne également un procédé de traitement de l'air dans une cuisine.

Dans le domaine des cuisines professionnelles ou de certaines cuisines particulières, il est connu d'extraire, au moyen d'une hotte munie de moyens d'aspiration, l'air vicié généré par la cuisson des aliments. L'air vicié étant aspiré à proximité des éléments de cuisine, sa température peut avoisiner les 40°C. Cet air vicié est notamment traité pour le purifier et évacué ensuite vers l'extérieur.

Une partie de l'air de la cuisine étant aspiré, il est nécessaire d'insuffler dans la cuisine de l'air neuf : cette opération est également appelée compensation. Généralement, l'air neuf soufflé dans la cuisine provient d'une zone extérieure au bâtiment dans laquelle la cuisine est aménagée. Afin que la température moyenne de la cuisine reste à un niveau normal, l'air soufflé est généralement maintenu à une température avoisinant 18°C. Ce chauffage peut être réalisé par différents moyens, notamment par soufflage d'air sur des tuyaux d'eau chaude ou sur des résistances chauffant l'air par effet Joule : les techniques connues de chauffage de l'air soufflé dans la cuisine nécessitent un apport d'énergie non négligeable.

Il est connu, notamment de WO-A-95/11410 de récupérer une partie de l'énergie calorifique contenue dans l'air vicié extrait de la cuisine, par exemple en faisant circuler un fluide caloporteur au voisinage du conduit d'extraction. L'énergie calorifique récupérée peut être utilisée au dehors de la hotte pour chauffer de l'eau ou de l'air. Néanmoins, la solution connue de WO-A-95/11410 fait circuler l'énergie calorifique à l'extérieur de la hotte vers des éléments pouvant être situés dans la cuisine, ce qui induit des pertes de charge et par conséquent, des pertes d'énergie.

Il est également connu, notamment de US-A-4 122 834, d'équiper une hotte de moyens de chauffage d'un flux d'air soufflé dans une cuisine, utilisant l'énergie récupérée par des moyens de récupération d'énergie calorifique d'un air extrait. Cette énergie est véhiculée dans la hotte par un circuit de fluide caloporteur.

Les hottes de traitement d'air connues ne permettent pas une régulation du chauffage de l'air neuf soufflé dans la cuisine permettant de s'adapter à diverses configurations d'utilisation de la hotte.

C'est à ces inconvénients qu'entend remédier l'invention en proposant une nouvelle hotte de traitement de l'air dans une cuisine, équipée de moyens permettant de s'adapter aux conditions d'utilisation de la hotte.

A cet effet, l'invention concerne une hotte de traitement de l'air dans une cuisine, équipée d'un système d'extraction d'air et d'un système de soufflage d'air dans la cuisine, alimenté à partir d'air extérieur, cette hotte comprenant des moyens de récupération d'une partie de l'énergie calorifique contenue dans l'air extrait de la cuisine, des moyens de chauffage de l'air soufflé dans la cuisine avec l'énergie calorifique récupérée par les moyens de récupération, et un circuit reliant en boucle les moyens de récupération et les moyens de chauffage, alors qu'un fluide caloporteur achemine l'énergie récupérée vers les moyens de chauffage via le circuit. Cette hotte est caractérisée en ce qu'elle comprend des moyens de mesure de la température de l'air à l'extérieur de la cuisine, et des moyens pour activer ou désactiver les moyens de chauffage de l'air soufflé dans la cuisine en fonction de la température de l'air à l'extérieur de la cuisine.

Grâce à l'invention, les moyens de chauffage peuvent être désactivés dès qu'une température donnée d'air extérieur est atteinte, sans nécessiter d'action de la part d'un utilisateur, ce qui permet d'utiliser l'énergie récupérée à d'autres fins.Selon des aspects avantageux mais non obligatoires de l'invention, une telle hotte peut incorporer une ou plusieurs des caractéristiques suivantes, prises avec toute combinaison techniquement admissible :
- La hotte comprend des moyens de nettoyage des moyens de récupération d'énergie calorifique.
- Les moyens de récupération de l'énergie calorifique comprennent une batterie froide.
- Les moyens de chauffage de l'air soufflé comprennent une batterie chaude.
- La hotte comporte des moyens de mesure de la température de l'air soufflé dans la cuisine.
- Les moyens pour désactiver ou activer les moyens de chauffage de l'air soufflé comprennent une unité de commande qui commande également le circuit de fluide caloporteur, les moyens de récupération d'énergie, et des moyens auxiliaires de chauffage de l'air soufflé.
- La hotte comporte une unité de commande adaptée pour contrôler le débit de fluide caloporteur dans les moyens de chauffage.
- La hotte comporte des moyens de chauffage auxiliaires adaptés pour éventuellement chauffer l'air soufflé en fonction de la mesure de température de l'air extérieur et/ou d'une mesure de température d'air soufflé, et/ou d'une mesure de la température ambiante dans la cuisine.
- Les moyens de chauffage auxiliaires comprennent une résistance, montée dans les moyens de chauffage, et adaptée pour chauffer l'air soufflé par effet Joule.
- Les moyens de chauffage auxiliaires comprennent un circuit de fluide caloporteur indépendant du circuit reliant les moyens de récupération et les moyens de chauffage, et circulant dans les moyens de chauffage de l'air soufflé.

L'invention concerne également un procédé de traitement de l'air dans une cuisine équipée d'une hotte, d'un système d'extraction d'air et d'un système de soufflage d'air dans la cuisine alimenté à partir d'air extérieur, comprenant au moins des étapes consistant à :
a) Récupérer, dans la hotte, une partie de l'énergie calorifique contenue dans l'air extrait de la cuisine,
b) Chauffer, dans la hotte, l'air soufflé dans la cuisine en utilisant l'énergie récupérée par l'intermédiaire d'un fluide caloporteur.

Ce procédé est caractérisé en ce qu'il consiste à activer ou désactiver le chauffage de l'air soufflé en fonction d'une mesure de la température de l'air extérieur.

Selon des aspects avantageux mais non obligatoires de l'invention, un tel procédé peut incorporer une ou plusieurs des caractéristiques suivantes, prises avec toute combinaison techniquement admissible :
- La température de l'air soufflé est automatiquement maintenue à une température de consigne paramétrable, de préférence comprise entre 17°C et 19°C, de préférence égale à 18°C.
- Le procédé consiste à chauffer l'air soufflé dans la cuisine à l'aide de moyens de chauffage auxiliaires extérieurs à la hotte ou de moyens de chauffage auxiliaires intérieurs à la hotte.
- Le procédé consiste à piloter les moyens de chauffage auxiliaires extérieurs ou intérieurs à la hotte pour chauffer l'air soufflé en fonction de la mesure de température de l'air extérieur et/ou de l'air soufflé et/ou d'une mesure de la température ambiante dans la cuisine.
- Le procédé consiste à réguler le débit de fluide caloporteur en fonction d'une mesure de la température de l'air soufflé.

L'invention sera mieux comprise et d'autres avantages de celle-ci apparaîtront plus clairement à la lumière de la description qui va suivre de trois modes de réalisation d'une hotte de traitement d'air et d'un procédé de traitement de l'air dans une cuisine conformes au principe de l'invention, donnée uniquement à titre d'exemple non limitatif et faite en référence aux dessins annexés dans lesquels :
- la figure 1 est un schéma de principe d'une hotte de traitement d'air conforme à un premier mode de réalisation de l'invention, installée dans une cuisine ;
- la figure 2 est un schéma de principe d'un moyen de chauffage d'air soufflé appartenant à une hotte conforme à un second mode de réalisation de l'invention installée dans une cuisine;
- la figure 3 est une vue d'une partie d'une hotte conforme à un troisième mode de réalisation de l'invention, installée dans une cuisine.

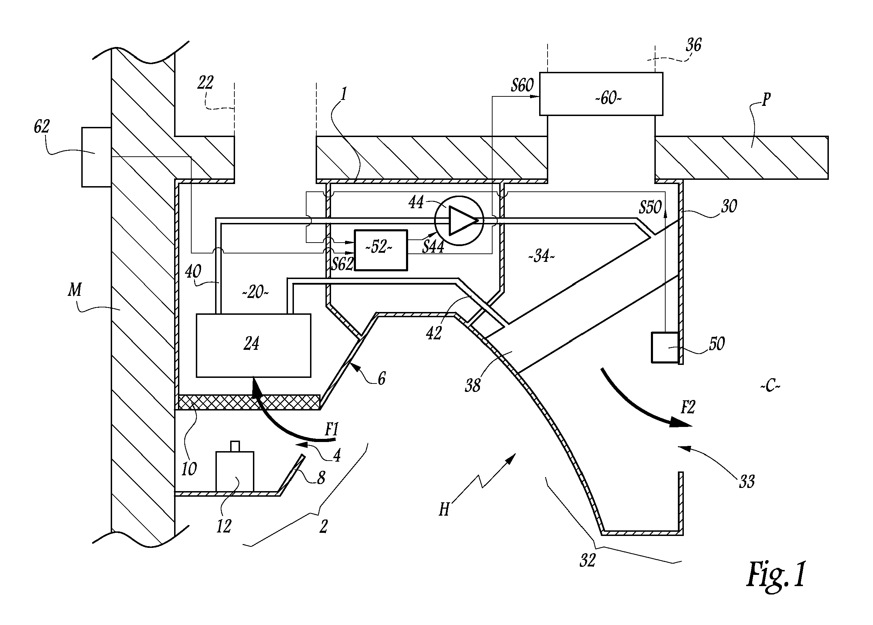

La figure 1 représente une hotte H, installée dans une cuisine C. La hotte H est fixée à un mur M et à un plafond P représentés en coupe. La hotte H comporte un caisson 1, délimitant par ses parois un volume intérieur de la hotte H.

La hotte H comporte un conduit 2 d'extraction d'air vicié, également appelé « capteur », situé au-dessus d'appareils de cuisson non représentés. Ce conduit 2 comprend une ouverture 4 ménagée dans un plan oblique 6 et une lèvre inférieure 8 de récupération des graisses et impuretés contenues dans l'air vicié.

L'air vicié extrait passe dans un filtre 10, dans lequel les graisses et les impuretés s'accumulent. Un système de pulvérisation 12 est monté dans le conduit 2, au-dessus de la lèvre 8, et permet de nettoyer le filtre 10 afin d'éviter qu'il ne se bouche.

Le conduit d'air vicié 2 se prolonge dans la hotte H dans un compartiment d'extraction 20 du caisson 1, qui communique avec une conduite 22 d'air vicié intégrée à la cuisine C, qui traverse le plafond P et est reliée fluidiquement avec le compartiment d'extraction 20. Cette conduite 22 permet d'évacuer l'air vicié de la cuisine et débouche, par exemple, à l'extérieur du bâtiment dans lequel la cuisine C est aménagée. A ce titre, la conduite 22 peut comprendre des moyens d'aspiration et de filtrage d'air.

Un dispositif 24 de récupération d'énergie calorifique, également appelé « batterie froide » est installé dans le compartiment d'extraction 20 du caisson 1 en aval du filtre 10 en référence au sens de circulation de l'air vicié, représenté par la flèche F1 à la figure 1. Le système de pulvérisation 12 est adapté pour nettoyer la batterie froide 24.

La batterie froide 24 peut être de plusieurs types connus de l'homme du métier, notamment un échangeur cyclonique. L'air extrait de la cuisine provenant du voisinage des éléments de cuisson, sa température peut atteindre les 40°C et une partie de l'énergie calorifique contenue dans l'air vicié est donc récupérée par la batterie froide 24 par un échange de chaleur entre l'air vicié et un fluide caloporteur circulant dans la batterie froide 24. Une fois que l'air vicié a circulé dans la batterie froide 24, il poursuit son trajet vers la conduite d'air vicié 22 en vue de son évacuation.

La hotte H comporte, du côté d'une façade 30 orientée à l'opposé du mur M par rapport à la cuisine C, une visière 32, également appelée « plénum de soufflage », destinée à insuffler de l'air neuf dans la cuisine C, par une ouverture de sortie 33 ménagée dans la façade 30, pour compenser l'extraction d'air vicié réalisée par la hotte H. La visière 32 communique avec un compartiment de soufflage 34 du caisson 1 distinct du compartiment d'extraction 20, qui communique avec une conduite d'air neuf 36 intégrée à la cuisine C et qui débouche dans le compartiment de soufflage 34 à travers le plafond P. L'air neuf est aspiré à l'extérieur du bâtiment par des ventilateurs, non représentés, et est insufflé dans la cuisine C par d'autres ventilateurs non représentés pour la clarté du dessin.

Pour le confort des personnes travaillant dans la cuisine C, il est nécessaire d'y maintenir une température de consigne paramétrable, qui peut être comprise entre 17°C et 19°C et vaut de préférence 18°C. La température de l'air neuf insufflé dans la cuisine C est donc contrôlée pour participer à la régulation de température de la cuisine C. La température de l'air neuf insufflé dans la cuisine est maintenue à la température de consigne.

Pour chauffer l'air neuf insufflé dans la cuisine C, l'énergie calorifique récupérée de l'air extrait de la cuisine C est utilisée, ce qui permet une économie d'énergie non négligeable. La hotte H comprend un système de transfert de l'énergie calorifique entre la batterie froide 24 et un dispositif 38 de chauffage de l'air neuf, également appelé « batterie chaude ». La batterie chaude 38 est montée dans le compartiment de soufflage 34 du caisson 1, de manière que l'air neuf insufflé dans la cuisine C selon la flèche F2 passe dans la batterie chaude 38 avant sa sortie par l'ouverture 33.

Un circuit d'écoulement de fluide caloporteur, en boucle, relie fluidiquement la batterie froide 24 et la batterie chaude 38 à l'intérieur du caisson 1. Une canalisation chaude 40 achemine le fluide caloporteur ayant emmagasiné de l'énergie calorifique en passant dans la batterie froide 24 vers la batterie chaude 38. Le fluide caloporteur sort de la batterie chaude 38 après avoir libéré une partie de son énergie calorifique dans l'air neuf, par une canalisation froide 42 qui achemine le fluide caloporteur jusqu'à l'entrée de la batterie froide 24. Les canalisations 40 et 42 peuvent comprendre des vases d'expansion, des circulateurs, des vannes et tout autre élément permettant une régulation fine du débit de fluide caloporteur.

Pour communiquer l'énergie calorifique à l'air neuf, le fluide caloporteur décrit, dans la batterie chaude 38, un circuit ondulant de manière à augmenter la surface d'échange entre le fluide et l'air neuf.

La récupération d'énergie par la batterie froide 24, le transfert d'énergie par les canalisations 40 et 42 et le chauffage de l'air par la batterie chaude 38 ont lieu à l'intérieur du caisson 1 de la hotte H, ce qui limite les pertes d'énergie.

Le fluide caloporteur peut être de plusieurs types connus de l'homme du métier. Il peut s'agir d'un liquide, tel que de l'eau. Dans ce cas, la canalisation chaude 40 comporte une pompe 44 permettant de gérer le débit d'eau en direction de la batterie chaude 38. Un autre liquide peut également être utilisé pour transporter l'énergie calorifique dans la hotte H.

En variante, le fluide caloporteur peut être un gaz, tel que de l'air, ou tel que les gaz utilisés dans le fonctionnement des pompes à chaleur, par exemple du gaz connu sous l'appellation R410. Dans ce cas, la circulation du gaz est entretenue, non pas par une pompe mais par un compresseur, connecté à la canalisation chaude 40 de la même manière que la pompe 44.

Le fonctionnement de la hotte H est régulé afin d'obtenir une température d'air neuf égale à la température de consigne. Une sonde de température 50 fixée à la hotte H dans la visière de soufflage 32 permet de mesurer la température de sortie de l'air neuf au voisinage de l'ouverture 33. Cette température est transmise à une unité de commande 52 de la hotte H par un signal électrique S50. En fonction de la température de l'air neuf insufflé, l'unité de commande 52 contrôle la pompe ou le compresseur 44 pour régler le débit de fluide caloporteur dans la batterie chaude, au moyen d'un signal électrique S44. Pour augmenter substantiellement la température de l'air neuf, il suffit, par exemple, de faire varier le débit de fluide caloporteur dans la batterie chaude 38 ou bien de procéder à une régulation « tout ou rien » du débit.

Le fonctionnement de la batterie chaude 38 et du circuit de circulation du fluide caloporteur n'est pas permanent. En effet, son fonctionnement est adapté à une configuration hiver, dans laquelle il est nécessaire de chauffer les locaux ainsi que l'air neuf aspiré de l'extérieur pour maintenir une température normale dans les locaux. Dans une configuration été, il n'est pas nécessaire de chauffer l'air neuf ni les locaux. L'énergie récupérée peut, dans ce cas, être utilisée à d'autres fins.

En variante, il peut être envisagé de désactiver automatiquement ou manuellement les moyens de récupération d'énergie lorsque le chauffage de l'air soufflé est inutile notamment en configuration été.

Dans le cas où l'air aspiré de l'extérieur est à une température trop basse, des moyens de chauffage auxiliaires de l'air neuf sont mis en oeuvre pour assister la batterie chaude 38 au cas où la quantité d'énergie calorifique récupérée dans l'air vicié extrait de la cuisine C n'est pas suffisante pour chauffer l'air neuf à la température de consigne.

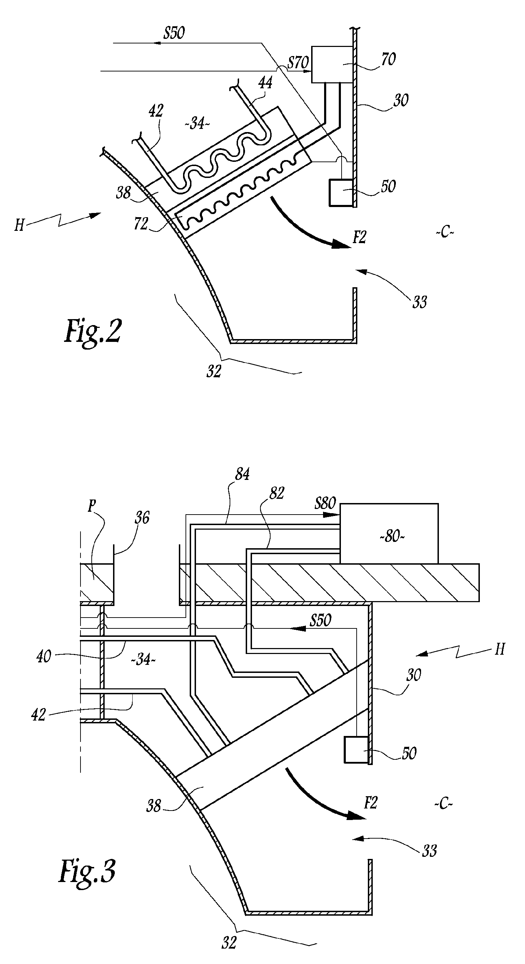

Le premier mode de réalisation de la hotte H utilise des moyens auxiliaires de chauffage extérieurs à la hotte H, permettant de chauffer l'air entrant dans le compartiment de soufflage 34 grâce à une chaudière 60 destinée à chauffer l'air neuf circulant dans la conduite 36. La chaudière 60 est contrôlée par l'unité de commande 52 par l'intermédiaire d'un signal électrique S60, sur la base de la température réelle de l'air neuf soufflé mesurée par la sonde 50 et sur la base d'une mesure de température extérieure réalisée par une sonde 62 située à l'extérieur du bâtiment et transmise à l'unité de commande 52 par l'intermédiaire d'un signal électrique S62. La mesure de température extérieure réalisée par la sonde 62 permet de prévoir la quantité d'énergie calorifique supplémentaire à fournir par la chaudière 60 en vue d'atteindre la température de consigne. Dans un second mode de réalisation de la hotte H représenté à la figure 2, l'énergie calorifique supplémentaire est apportée par un dispositif électrique, intégré à la hotte H, comportant un bloc d'alimentation 70 et une résistance 72 placée à proximité de la batterie chaude 38 et permettant de chauffer l'air neuf par effet Joule et convection.

Selon un principe similaire à celui du premier mode de réalisation, le fonctionnement du bloc d'alimentation 70 est régulé par l'unité de commande 52 grâce à un signal électrique S70. Pour augmenter la température de l'air, on peut notamment augmenter la tension ou l'intensité fournie par le bloc d'alimentation 70.

Le bloc d'alimentation 70 peut être alimenté par le réseau électrique domestique fonctionnant par exemple sur une tension de 220 Volts. La batterie chaude 38 et la résistance 72 sont représentées sur la figure 2 comme étant distinctes. En variante, la résistance 72 peut être incorporée à la batterie chaude 38 afin d'apporter une énergie calorifique supplémentaire au fluide caloporteur circulant dans la batterie chaude.

Selon un troisième mode de réalisation de l'invention représenté à la figure 3, l'énergie calorifique supplémentaire apportée pour chauffer l'air neuf insufflé dans la cuisine C de façon à atteindre la température de consigne est apportée par un circuit de fluide caloporteur auxiliaire indépendant et alimenté par une chaudière 80 extérieure à la hotte H. La chaudière 80, installée au-dessus du plafond P de la cuisine C, est adaptée pour chauffer un fluide caloporteur qui peut être de l'eau, du gaz ou tout autre fluide. Le fluide caloporteur chauffé est amené à la batterie chaude 38 par une canalisation 82 et ressort de la batterie 38 en direction de la chaudière 80 par une canalisation 84. Dans la batterie 38, le fluide caloporteur contenu dans un circuit auxiliaire permet d'apporter une énergie calorifique supplémentaire lors du chauffage de l'air neuf destiné à être soufflé dans la cuisine C. La chaudière 80 est associée à une pompe ou à un compresseur, non représentés, permettant d'envoyer le fluide caloporteur en direction de la batterie chaude 38.

Le fonctionnement de la chaudière 80 est régulé par l'intermédiaire d'un signal électrique S80 transmis par l'unité de commande 52 en fonction de la température de l'air extérieur relevée par la sonde 62.

Les moyens de chauffage auxiliaires décrits dans les trois modes de réalisation précités peuvent être mis en oeuvre conjointement dans le cadre de la présente invention ou selon des combinaisons adaptées à certains critères, notamment en fonction de la consommation d'énergie globale du bâtiment.

La circulation du fluide caloporteur entre la batterie froide 24 et la batterie chaude 38 se fait exclusivement à l'intérieur du caisson 1 de la hotte H, ce qui permet de limiter fortement les pertes d'énergie calorifique. D'autre part, l'utilisation directe de l'énergie récupérée pour chauffer l'air neuf permet d'éviter le stockage d'énergie dans la hotte H ou dans la cuisine C.

L'unité de commande 52 peut être programmée par un utilisateur en fonction de paramètres choisis, ce qui permet éventuellement de sélectionner préférentiellement certains moyens de chauffage auxiliaires, de paramétrer la température de consigne, de sélectionner des plages de température de l'air neuf insufflé dans la cuisine, ou tout autre donnée de régulation du traitement de l'air dans la cuisine C. L'unité de commande 52 gère de façon automatique ces multiples paramètres pour que la température de l'air soufflé soit égale à la température de consigne.

L'unité de commande 52 est également adaptée pour activer ou désactiver automatiquement la configuration été, c'est-à-dire activer ou désactiver le fonctionnement de la batterie chaude 38 ou plus généralement des moyens de chauffage de l'air soufflé, en fonction de la mesure S62 de la température de l'air extérieur. Si la température S62 de l'air extérieur devient suffisamment élevée pour que l'air extérieur ne nécessite pas d'être chauffé avant d'être soufflé dans la cuisine, la circulation de fluide caloporteur dans la batterie chaude 38 est interrompue par l'unité de commande 52 et l'énergie récupérée dans l'air extrait est utilisée à d'autres fins, De la même manière, si la température extérieure vient à diminuer, la circulation de fluide dans la batterie chaude 38 est réactivée par l'unité de commande 52. L'unité de commande 52 permet aussi à l'utilisateur de désactiver les moyens de chauffage, notamment en configuration été, de façon manuelle. La configuration été peut être activée ou désactivée indépendamment d'une programmation basée sur les saisons.

L'unité de commande 52 est également adaptée pour activer ou désactiver les moyens de récupération d'énergie calorifique dans l'air viciée extrait de la cuisine en fonction de la mesure S62 de température de l'air extérieur. La désactivation peut, par exemple, être réalisée en interrompant la circulation de fluide caloporteur dans la batterie froide 24.

En variante, le conduit d'air vicié 2 peut ne pas comprendre de filtre et déboucher directement sur la batterie froide 24. Dans ce cas, le système de nettoyage 12 est utilisé directement sur la batterie froide 24. Il peut mettre en oeuvre un brouillard sec contenant un produit dit « biotechnologique » permettant de rompre les liaisons chimiques des graisses contenues dans l'air vicié extrait de la cuisine C.

Selon un mode de réalisation non représenté, la hotte H peut être équipée d'une sonde de mesure de la température ambiante de la cuisine. Cette mesure sert notamment à réguler, à l'aide de la batterie chaude 38 et des moyens auxiliaires de chauffage de l'air soufflé contrôlés par l'unité de commande 52, la température de l'air soufflé en fonction d'une consigne de température ambiante dans la cuisine.

## Revendications

1. Hotte (H) de traitement de l'air dans une cuisine (C), équipée d'un système d'extraction d'air (4, 20, 22) et d'un système de soufflage d'air (32, 34, 36) dans la cuisine (C), alimenté à partir d'air extérieur, cette hotte comprenant :
- des moyens (24) de récupération d'une partie de l'énergie calorifique contenue dans l'air extrait de la cuisine (C),
- des moyens de chauffage (38) de l'air soufflé dans la cuisine avec l'énergie calorifique récupérée par les moyens de récupération (24), et
- un circuit (40, 42) reliant en boucle les moyens de récupération (24) et les moyens de chauffage (38),
alors qu'un fluide caloporteur achemine l'énergie récupérée vers les moyens de chauffage (38) via le circuit (40, 42),
cette hotte (H) étant **caractérisée en ce qu'**elle comprend des moyens (62) de mesure de la température de l'air à l'extérieur de la cuisine, et des moyens (52) pour activer ou désactiver les moyens de chauffage (38) de l'air soufflé dans la cuisine en fonction de la température (S62) de l'air à l'extérieur de la cuisine.

2. Hotte selon la revendication 1, **caractérisée en ce qu'**elle comprend des moyens (12) de nettoyage des moyens (24) de récupération d'énergie calorifique.

3. Hotte selon l'une des revendications précédentes, **caractérisée en ce que** les moyens de récupération de l'énergie calorifique comprennent une batterie froide (24).

4. Hotte selon l'une des revendications précédentes, caractérisée en ce les moyens de chauffage de l'air soufflé comprennent une batterie chaude (38).

5. Hotte selon l'une des revendications précédentes, **caractérisée en ce qu'**elle comporte des moyens (50) de mesure (S50) de la température de l'air soufflé dans la cuisine (C).

6. Hotte selon l'une des revendications précédentes, **caractérisée en ce que** les moyens pour activer ou désactiver les moyens de chauffage (38) de l'air soufflé comprennent une unité de commande (52) qui commande également:
- le circuit (40, 42) de fluide caloporteur,
- les moyens (24) de récupération d'énergie,
- des moyens (70, 72, 82, 84) auxiliaires de chauffage de l'air soufflé.

7. Hotte selon l'une des revendications précédentes, **caractérisée en ce qu'**elle comporte une unité de contrôle (52) adaptée pour contrôler (S44) le débit de fluide caloporteur dans les moyens de chauffage (38).

8. Hotte selon l'une des revendications précédentes, **caractérisée en ce qu'**elle comporte des moyens de chauffage auxiliaires (70, 72, 82, 84) adaptés pour éventuellement chauffer l'air soufflé en fonction de la mesure de température de l'air extérieur (S62) et/ou d'une mesure de température d'air soufflé (S50) et/ou d'une mesure de la température ambiante dans la cuisine (C).

9. Hotte selon la revendication 8, **caractérisée en ce que** les moyens de chauffage auxiliaires comprennent une résistance (72), montée dans les moyens de chauffage (38), et adaptée pour chauffer l'air soufflé par effet Joule.

10. Hotte selon la revendication 8, **caractérisée en ce que** les moyens de chauffage auxiliaires comprennent un circuit (82, 84) de fluide caloporteur indépendant du circuit (40, 42) reliant les moyens de récupération (24) et les moyens de chauffage (38), et circulant dans les moyens de chauffage (38) de l'air soufflé.

11. Procédé de traitement de l'air dans une cuisine (C) équipée d'une hotte (H), d'un système d'extraction d'air (20) et d'un système de soufflage d'air (36) dans la cuisine (C), alimenté à partir d'air extérieur, comprenant au moins des étapes consistant à :
a) récupérer, dans la hotte (H), une partie de l'énergie calorifique contenue dans l'air extrait de la cuisine (C),
b) chauffer, dans la hotte (H), l'air soufflé dans la cuisine (C) en utilisant l'énergie récupérée par l'intermédiaire d'un fluide caloporteur,
**caractérisé en ce qu'**il consiste à activer ou désactiver le chauffage de l'air soufflé dans la cuisine (C) en utilisant l'énergie récupérée par l'intermédiaire du fluide caloporteur, en fonction d'une mesure (S62) de la température extérieure.

12. Procédé selon la revendication 11, **caractérisé en ce que** la température de l'air soufflé est automatiquement maintenue à une température de consigne paramétrable, de préférence comprise entre 17°C et 19°C, de préférence égale à 18°C.

13. Procédé selon l'une des revendications 11 et 12, **caractérisé en ce qu'**il consiste à chauffer l'air soufflé dans la cuisine (C) à l'aide de moyens de chauffage auxiliaires (60, 80) extérieurs à la hotte (H) ou de moyens de chauffage auxiliaires (70) intérieurs à la hotte.

14. Procédé selon la revendication 13, **caractérisé en ce qu'**il consiste à piloter (S60, S70, S80) les moyens de chauffage auxiliaires extérieurs (60, 80) ou intérieurs (70) à la hotte (H) pour chauffer l'air soufflé en fonction de la mesure de température de l'air extérieur (S62) et/ou de l'air soufflé (S50) et/ou d'une mesure de la température ambiante dans la cuisine (C).

15. Procédé selon l'une des revendications 11 à 14, **caractérisé en ce qu'**il consiste à réguler (S44) le débit de fluide caloporteur en fonction d'une mesure (S50) de la température de l'air soufflé.
